# EUROPEAN PATENT APPLICATION

(11) **EP 1 167 892 A2**
(43) Date of publication of application: **02.01.2002**
(21) Application number: 01114185.0
(22) Date of filing: 12.06.2001
(51) Int. Cl.: F24J 2/34, F24J 2/32

(54) **Solar thermoaccumulator**

(30) Priority: 22.06.2000 IT CO000016
(71) Applicant: ENERGINEERING DI DEL DUCA AMELIA, 22063 Cantu (Como) (IT)
(72) Inventor: Terraneo, Livio, 22063 Cantu (Como) (IT)
(74) Representative: Lecce, Giovanni

(57) **Abstract**

A solar thermoaccumulator comprising a parallel battery of closed-circuit vacuum solar pipes (7) provided with accumulation bulbs (6) which are either immersed in a primary conductive fluid that circulates in an annular chamber (3) having an air space, whose internal wall (8) is the containing wall of a reservoir (9) containing a fluid to be heated, or are put in direct touch of thermal conduction with tubular tangs (11) fixed to reservoir (9'). The reservoir (9, 9') may be single or associated to and sequentially communicating with other upstream, parallel aligned reservoirs (16).

## Description

### BACKGROUND OF THE INVENTION

### Field of the invention

The present invention relates to a solar thermoaccumulator.

More particularly, the present invention relates to a solar thermoaccumulator of the type comprising a battery of closed-circuit vacuum heat pipes that transfer heat to a circuit to be heated.

### Prior art

Apparatuses capable of collecting solar energy and utilizing it for industrial and/or domestic purposes are already known.

In particular, there are known and increasingly developing the so-called solar panels, designed for heating water in houses or community facilities such as: hotels, gymnasiums, barracks, camping grounds, and so on. Said panels are substantially designed as function of the process that exploits the physical law according to which hot fluids naturally travel from down upwards, while the cold ones travel in the contrary direction. Some types of flat plate collectors or solar panels are constituted of flat, blackened, metal containers in whose inside the primary fluid flows in coiling pipes. They are insulated at the bottom to prevent convection heat losses, comprise top blackened glass panels, and are so oriented as to ensure the perpendicularity of their surface with respect to the average direction of sun rays. Rays, both the direct and the diffuse ones, going through the thickness of glass, heat the metal surface of the connector and, as a consequence, also the fluid flowing in the coils. The primary fluid, once heated, flows upwards, always by convection (sometimes pushed by a small pump), travels a circuit comprinsing a heat exchanger and heats the water contained in an accumulation reservoir connected to the distribution systems. Said apparatuses, valid though their functional principle is, have a limited yield of approximately 50% which, while being obtained by exploiting the entirely gratuitous solar energy, is poorly advantageous as concerns the amortization of the costs of the panels.

Collectors are also known having a higher yield that utilize the solar pipe technique. Said solar pipes comprise an absorbing plate bonded to a heat pipe, and the assembly is sealed within an evacuated glass pipe; the heat pipe is coupled to a condenser. The radiation striking the plate is absorbed and then transferred as thermal energy to the condenser. The absorbing plate is coated with a special high efficiency selective coating which ensures the maximum radiation absorption and minimum thermal radiation losses. Heat, which cannot scatter thanks to the internal vacuum condition, is transmitted without appreciable scattering to an adjoining tubular body provided with an intermediate wall that separates the delivery circuit from the return circuit of the primary fluid. By exploiting the same physical principle of natural circulation of the hot fluids from down upwards, and orienting the collecting plates of the solar pipes inclined and perpendicular with respect to the average direction of sun rays, the heated primary fluid can be exploited in a different way. In one case, the upper part of each solar pipe comprises hydraulic taps through which the heated fluid is connected to a heat exchanger that heats the water contained in an accumulation reservoir connected to the distribution systems. In another case, the upper accumulation bulbs of the solar pipes are, instead, adheringly engaged, with heat transmission by convection and conduction, in corresponding profiled niches, obtained on the same piping of the circuit of the heat exchanger.

Even though the adoption of solar pipes has allowed to realize marked increases in yield and efficacy, and has allowed the development of solar panels even in regions with reduced sun exposures, the present configuration of said panels is still complex and expensive from the point of view of construction and installation and maintenance.

Besides, another drawback lies in that the present solar panels have a limited capacity.

### SUMMARY OF THE INVENTION

Object of the present, invention is to eliminate the above drawbacks.

More particularly, object of the present invention is to provide a solar thermoaccumulator which, besides having high thermal yields and efficacy, is easily realizable and has a very reduced cost.

According to the present invention, these and still other objects are achieved by a solar thermoaccumulator comprising a battery of closed-circuit vacuum solar pipe, each pipe being coupled to a heat accumulation bulb or condenser; a reservoir containing a fluid to be heated, circumscribed by a shell and provided with fluid feeding pipes and discharge pipes, and a means for transferring heat from said heat accumulation bulbs to the fluid to be heated, wherein the heat accumulation bulbs or condensers are mounted on the lower surface of the shell of the reservoir containing the fluid to be heated.

According to a preferred embodiment of the present invention, the reservoir containing the fluid to be heated is provided with a peripheral, annular, enveloping chamber having an air space, whereto the primary conductive liquid is caused to flow, and the heat accumulation bulbs or condensers are immersed in said primary conductive liquid.

According to another preferred embodiment of the present invention, the lower surface of the reservoir containing the fluid to be heated is provided with tubular, parallel and aligned tangs, and the heat accumulating bulbs or condenser are placed in direct thermal conduction touch with said tangs.

The reservoir containing the fluid to be heated may be a single one, having preferably a horizontal development, or it may be associated to other reservoirs, horizontal, parallel aligned and communicating with each other through slits or longitudinal ports.

The advantages achieved by the solar thermoaccumulator of the present invention lie essentially in that the connections of the accumulation bulbs of the closed-circuit vacuum solar pipes with the reservoirs are much simpler to construct and more accessible for both the assembly and maintenance operations, and besides the mutual association of heat transfer is caused to be more effective, with a higher yield. Another advantage lies in that, as the minimum overall dimensions increase, marked increases in the heated fluid capacity are obtained.

### BRIEF DESCRIPTION OF THE DRAWINGS

The constructive and functional characteristics of the solar thermoaccumulator of the present invention will be better understood thanks to the following description, wherein reference is made to the figures of the attached drawings that represent preferred non-limiting examples of embodiment, and wherein:
Figure 1 shows a schematic partial view of a cross-section of a solar thermoaccumulator with the accumulation bulbs immersed in the closed-circuit primary conductive fluid;
Figure 2 shows the schematic partial view of a cross-section of a solar thermoaccumulator with the accumulation bulbs associated to the tubular tangs that are integral with the shell constituting the reservoir;

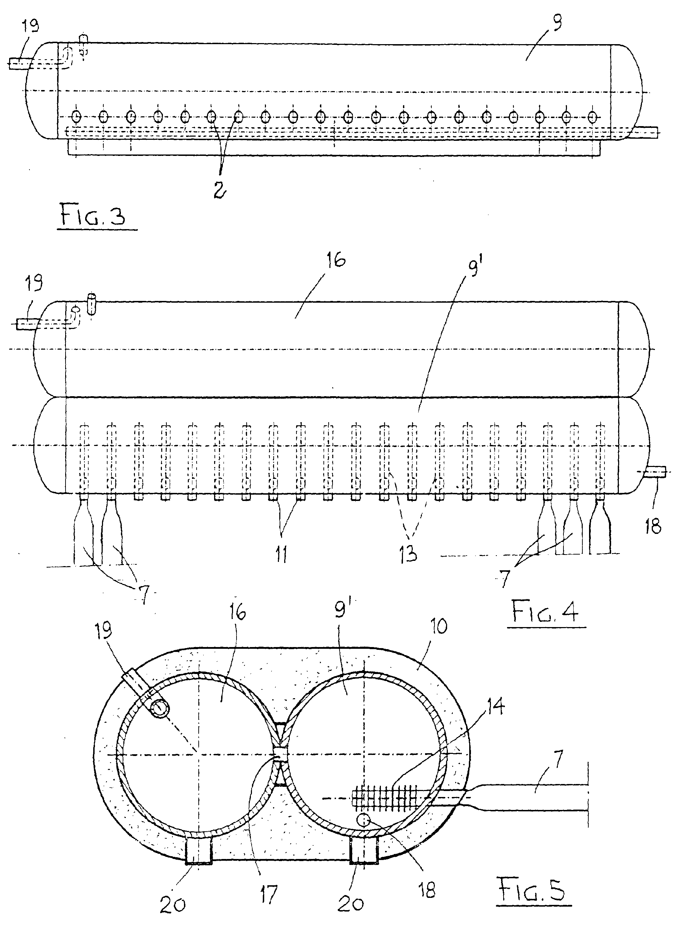

Figure 3 shows the schematic front view of a thermoaccumulator reservoir wherein there is stressed the position of the connection tangs for the bulbs of the solar pipes;

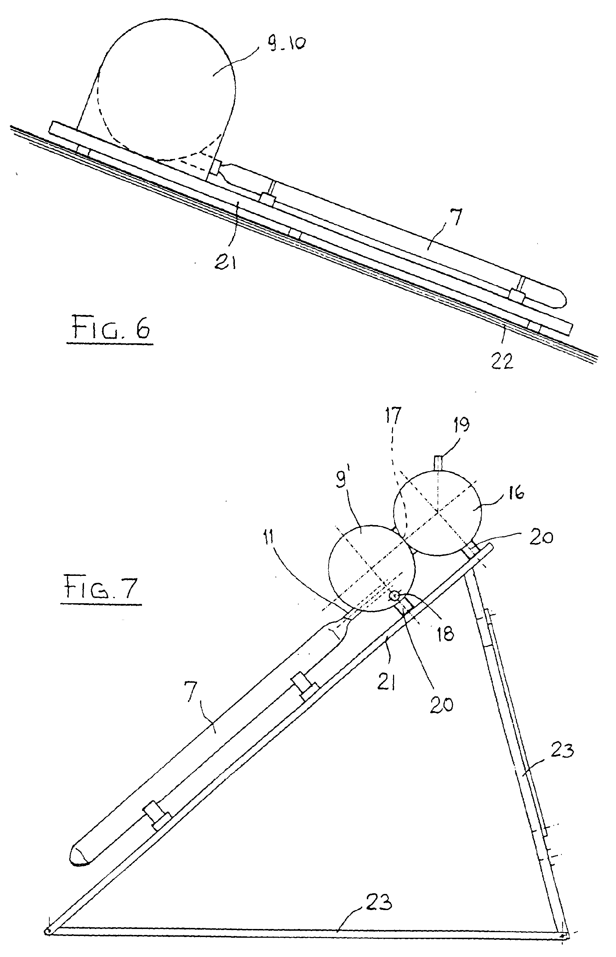

Figure 4 shows the schematic plan view of a thermoaccumulator wherein there is stressed the position of the solar pipes with respect to the reservoir formed by several sequential tubular bodies;
Figure 5 shows the schematic view of the cross-section of a thermoaccumulator having two sequential tubular bodies;
Figure 6 shows the schematic side view of a thermoaccumulator having a single reservoir, according to the present invention, located on a roof pitch; and
Figure 7 shows the schematic side view of a solar thermoaccumulator having a double reservoir, according to the present invention, located on a frame to be placed on the ground or terraces or the like.

### DESCRIPTION OF PREFERRED EMBODIMENTS

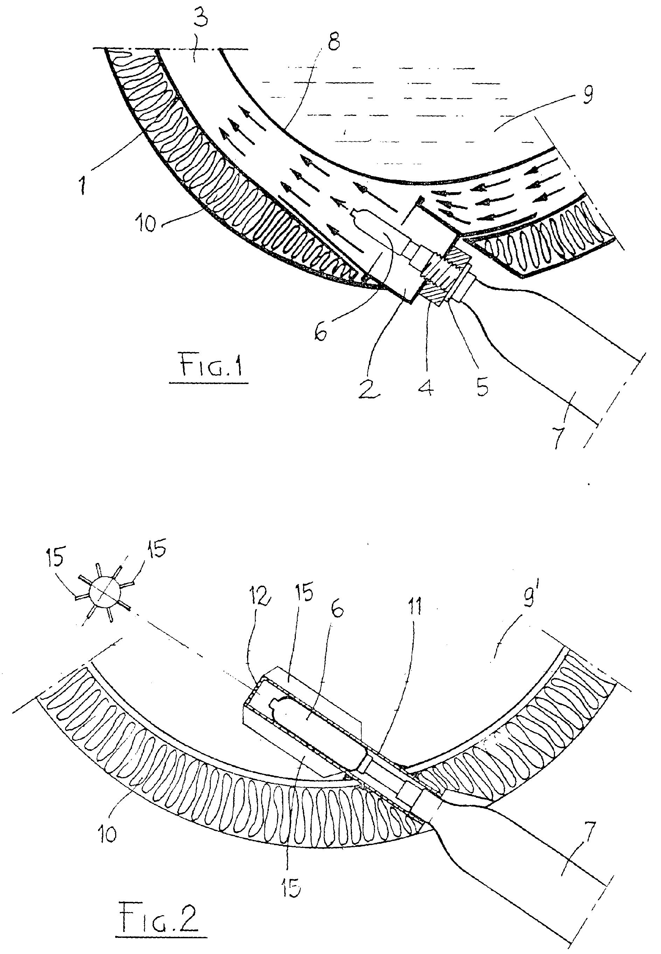

Figure 1 relates to a first example of embodiment of a fluid indirect heating thermoaccumulator. In this embodiment, a reservoir containing the fluid to be heated, having preferably a horizontally developed cylindrical shape, comprises a plurality of lower unions 2. Said unions 2 are equidistant throughout the longitudinal lower extension of said container 9, with an alignment substantially tangential to an annular peripheral chamber 3 containing a conductive primary fluid. Said annular chamber 3 is circumscribed by an external wall 1 and an internal wall 8 in touch with the fluid to be heated.

On the lower unions 2 there are tied by screws 4 and with sealing gasket 5, the condensers or accumulation bulbs 6, of at least a parallel battery of closed-circuit vacuum solar pipes 7. Said condensers 6 are immersed in and get in a direct contact relation with said conductive fluid that circulates in said annular chamber 3, such as for instance water or other suitable conductive liquids. Said fluid is comprised in chamber 3, recirculates as closed-circuit in the same, heats when it gets in touch with bulbs 6, goes upwards with a natural motion along the peripheral chamber 3, transfers progressively its heat to the internal part 8 of reservoir 9, goes downwards once cooled, along the opposite side of said chamber 3 and gets anew in touch with bulbs 6, to heat again. The heat which the fluid transfers to the internal walls 8 is transferred by the latter to the water to be heated contained in reservoir 9. The external wall 1 of chamber 3 is adequately covered with an insulating material 10, to reduce as much as possible heat losses towards the outside and to convey all the thermal exchange of the primary fluid towards the internal wall 8. The closed-circuit vacuum solar pipes 7 are oriented and inclined to obtain a position substantially perpendicular to the average direction of sun rays.

Figure 2 relates to a second example of the water direct heating thermoaccumulator of the present invention. In this solution, reservoir 9', having preferably but not critically a horizontal development cylindrical shape, comprises a plurality of internal tangs 11, which are equidistant throughout the longitudinal lower extension of reservoir 9'. Tangs 11 are open towards the outside, while their end 12, included in the reservoir, is sealed.

The active ends or accumulation bulbs or condensers 6 of at least a battery in parallel of closed-circuit vacuum solar pipes 7 engage and get in relation touch with the internal part of the corresponding tangs 11, and through them, they transfer the calories accumulated in the water contained in reservoir 9'.

In order to ensure that heat transmission takes place in the best possible manner, substantially by conduction, bulbs 6 and tangs 11 are realized from different materials having a different expansion coefficient. For instance: bulbs are made from copper and tangs from steel, as copper has a linear expansion coefficient higher by about 50% than that of steel. This allows to realize both components with dimensions sufficient to ensure their cold coupling with a clearance, while once heated, the same clearance is entirely annulled by the different linear expansion of the materials, with ensuring perfect adhesion between the parts. The same tangs 11, may be realized, depending on the characteristics of the thermoaccumulators, with the surfaces in touch with the fluid to be heated that can be smooth 13, or have parallel annular finnings 14, or radial finnings 15.

To reservoir 9 or 9' there may be associated upstream at least a second reservoir 16 having the same volume or a different volume, aligned and parallel, and that is raised with respect to the inclination provided for the correct alignment of sun rays. This allows to increase the capacity of hot water accumulation of reservoir 9 or 9', keeping in any case the overall external size of the corresponding thermoaccumulator within reasonable limits to restrain the non harmonic effects it causes, especially when it is located on house roofs, without increasing its diameter.

The connection between the main reservoir 9 or 9' and the auxiliary reservoir(s) 16 takes place through the longitudinal slits 17 created in the zone of sealing coupling. Also in the auxiliary reservoirs, the water heated by the direct or indirect heat sources goes upwards, while cold air goes downwards.

In the figures there are schematically indicated the feeding pipes 18 of water to be heated, located in the lower part, and the discharge pipes 19 of heated water, located in the higher part. Reservoirs 9, 9', with insulation 10, and closed-circuit vacuum solar pipes 7, are provided with supports 20 for the tie on fixed frames 21, that can be oriented and positioned on roof pitches 22 or adjustable frames 23.

In all the realizations, the thermoaccumulators may be provided with electric resistances for the possible heat integration in case of long period of bad whether.

Although the present invention has been described above with reference to some illustrative embodiments, it is apparent that many alternatives and variants will be evident to those skilled in the art, in the light of the above description Therefore, the present invention intends to comprise all the alternatives and variants that fall within the spirit and the scope of the following claims.

## Claims

1. A solar thermoaccumulator comprising a battery of closed-circuit vacuum solar tubes (7), each pipe being coupled to a heat accumulation bulb or condenser (6); a reservoir (9) containing the fluid to be heated, circumscribed by a shell and provided with fluid feeding pipes (18) and discharge pipes (19) of the heated fluid, and a means to transfer heat from said heat accumulation bulbs or condensers (6) to the fluid to be heated, **characterized in that** the heat accumulation bulbs or condensers (6) are mounted throughout the lower longitudinal extension of the shell of reservoir (9) containing the fluid to be heated.

2. The solar thermoaccumulator according to claim 1,
**characterized in that** reservoir (9) containing the fluid to be heated is provided with a peripheral, annular, enveloping chamber (3) having an air space, whereto the primary conductive liquid is caused to flow, and the heat accumulation bulbs or condensers (6) are immersed in said primary conductive liquid.

3. The solar thermoaccumulator according to claim 2,
**characterized in that** the annular chamber (3) is circumscribed by an internal wall (8) in touch with the fluid to be heated, and an external wall (1).

4. The solar thermoaccumulator according to claim 3,
**characterized in that** the external wall (1) of the annular chamber (3) is provided with a plurality of unions (2) equidistant throughout its lower longitudinal extension with a substantially tangential alignment, and the condensers or accumulation bulbs (6) are tied to said unions (2).

5. The solar thermoaccumulator according to claim 1,
**characterized in that** the reservoir containing the fluid to be heated (9') is provided with parallel tubular tangs, aligned and equidistant (11), located throughout the lower longitudinal extension, and the heat accumulation bulbs or condensers (6) are put in direct thermal conduction touch with said tangs (11).

6. The solar thermoaccumulator according to claim 5,
**characterized in that** tangs (11) are open towards the outside and their end internal with respect to reservoir (9') is sealed.

7. The solar thermoaccumulator according to claim 5 or 6,
**characterized in that** the heat accumulation bulbs or condensers (6) and the tubular tangs (11) are made from materials having a different coefficient of thermal expansion.

8. The solar thermoaccumulator according to claim 7,
**characterized in that** the heat accumulation bulbs or condensers (6) are made from copper and the tubular tangs (11) from steel.

9. The solar thermoaccumulator according to any of the preceding claims 5-8, **characterized in that** tangs (11) have a surface in touch with the liquid to be heated (13) either smooth, or provided with parallel annular finnings (14), or radial finnings (15).

10. The solar thermoaccumulator according to any of the preceding claims, **characterized in that** at least an auxiliary reservoir (16) is coupled in an aligned and parallel position with the first reservoir (9, 9'); said reservoirs (9, 9', 16) being connected with each other by means of longitudinal slits (17) obtained in the coupling zone.

11. The solar thermoaccumulator according to any of the preceding claims, **characterized in that** reservoirs (9, 9', 16) are coated with an insulating material (10).
